# EUROPEAN PATENT APPLICATION

(11) **EP 1 195 931 A2**
(43) Date of publication of application: **10.04.2002**
(21) Application number: 01660181.7
(22) Date of filing: 28.09.2001
(51) Int. Cl.: H04H 1/00

(54) **Method and arrangement for receiving broadband data from a digital broadcast network and re-transmitting this data locally**

(30) Priority: 28.09.2000 FI 20002129
(71) Applicant: Nokia Corporation, 02150 Espoo (FI)
(72) Inventor: Talmola, Pekka, 20240 Turku (FI); Ikonen, Ari, 21280 Raisio (FI); Salo, Juha, 20660 Littoinen (FI)

(57) **Abstract**

The invention relates to a method and apparatus for transmitting through a single gateway terminal (100) the services required by a plurality of separate multimedia terminals (106). The gateway terminal receives the transmissions (103) coming from several different sources, descrambles and deinterleaves them, if necessary, and retransmits at an ISM frequency the services required by the multimedia terminals. The service transmitted may be sound, pictures, video, data or system monitoring information. In addition, there is a two-way wireless link from an individual multimedia terminal to the gateway terminal, by means of which link an individual terminal can control the services included by the gateway terminal in its transmission (108).

## Description

The invention relates to a method for distributing locally data. The invention further relates to a gateway terminal and multimedia terminals. Likewise the invention relates to a broadcast network arrangement.

Increasing utilization of information technology, such as Internet applications, in the office, as well as increasing mobility of staff has brought about the need for developing wireless mobile terminals. The transmission protocol used in conjunction with Internet applications, TCP/IP, is a packet-switched protocol. It means that the data packets transmitted in the network have always to be accompanied by an element identifying the address of the desired destination, which element thus reserves a significant portion of the data transmitted. Wireless local area networks (WLAN) may be implemented e.g. in accordance with the specifications set forth in the IEEE 802.11 standard. The transmission rate of wireless networks according to the standard is of the order of magnitude of 10 Mbit/s.

Household appliances/apparatuses are emerging in the consumer market that utilize the Bluetooth technology. With this technology it is possible to control, through a wireless communication network, a plurality of different apparatuses within a certain limited area. Bluetooth technology uses the 2.4-GHz frequency band and the transmission rate of the system can be nearly 10 Mbit/s, usually less.

TV and radio transmissions are switching over to digital technology in the near future. The DVB (Digital Video Broadcasting) family of standards is becoming the framework of video/TV broadcasting. By means of DVB technology it is possible to include typically four to five normal DVB-TV transmissions or one HDTV (High Definition TV) transmission in the bandwidth needed by one analog terrestrial TV channel. Reception of these transmissions requires set-specific decoder terminals, so-called set-top boxes, which demodulate and de-scramble the transmitted signal and convert it into a form suitable for TV.

Wireless communications is growing rapidly but the problem is that integration of the different systems is rather modest and the systems are practically incapable of inter-working with each other. Utilization of the aforementioned systems requires that users buy expensive decoder terminals of the various systems for each apparatus used. Furthermore, applications requiring high transmission speed, such as the DVB, easily choke up a transmission channel the transmission rate of which is lower, for example, of the order of 10 Mbit/s. For example, WLAN systems according to the IEEE 802.11 standard may accommodate one DVB signal in practice. Theoretically, a second DVB signal could be added, but that would prevent all other communication in the network. Therefore, current wireless systems according to the prior art are feasible in individual applications where high transmission capacity is not required. They cannot be used to implement, in an economically viable manner, short-range broadcasting systems in which large amounts of data are transferred to the terminal. It is of course possible to realize a broadband communications system using a cable network, but that would mean extra costs and would make possible network updates more difficult to carry out. Most importantly, it cannot be used as a system for connecting mobile terminals.

An object of this invention is to provide a new type of gateway terminal capable of wirelessly transmitting sound, images, data and IP traffic on a broadband transmission path to portable or fixed terminals. By means of the gateway terminal and multimedia terminals in association therewith, it is possible to realize an interactive multimedia network.

The objects of the invention are achieved by a gateway terminal, at the input side of which it is possible to connect separate communications systems. The communications systems may advantageously include a satellite receiver, ATSC (=Advanced Television Standards Committee) ISDB-T, DVB, PSTN (Public Switched Telephone Network), ISDN (Integrated Services Digital Network), ADSL (Asymmetric Digital Subscriber Line), xDSL (ADSL, VDSL, HDSL) express Digital Subscriber Line) or possible local data sources such as a PC's hard disk, DVD (Digital Versatile Disk) mass storage or semiconductor memory. The gateway terminal can decode and de-scramble the original first transmissions, if necessary, and re-combine the first transmissions and local data sources and transmit them at a free ISM (Industrial-Scientific-Medical) frequency to terminals nearby. Each terminal extracts from a broadband second transmission, which it has received, only the information it needs at that time. If necessary, it is possible to provide between each individual terminal and the gateway terminal a return channel, which typically has lower transmission rate than the receiving channel, that supports interactivity. Using this return channel each terminal may control the gateway terminal so that the latter includes in its broadband second transmission the first transmission/signal/data needed by that particular terminal.

A method according to the invention for providing a local digital broadband broadcast is characterized in that the received first transmissions are re-transmitted wirelessly as a digitally modulated broadband second transmission and that the second digital broadband transmission is received by at least one multimedia terminal.

A gateway terminal according to the invention for providing a broadband digital interactive broadcast network is characterized in that the means for re-transmitting the received first transmissions/signals/data as a second broadband digital transmission comprises a broadband part for transmitting the second transmission wirelessly by a broadband digital transmission at a frequency allocated to free use.

A multimedia terminal according to the invention is characterized in that the receiving antenna for the second transmission in the multimedia terminal is arranged so as to function at a frequency allocated to free use.

A local digital broadband broadcast network arrangement according to the invention is characterized in that the second transmission is a wireless digital broadband transmission and it is arranged so as to be transmitted at a frequency allocated to free use.

An embodiment of the invention is described next. A subscriber/apartment/office-specific wireless broadband broadcast network is provided at a frequency allocated to free use. Advantageously this frequency is an ISM frequency. All transmissions/signalling/data needed at a particular site, whether they come from external or local sources, are connected to the inputs of a gateway terminal (decoder terminal) belonging to the system. If necessary, the gateway terminal carries out descrambling and other operations for each received first transmission/signal/data and transmits the transmission/signal/data it has received advantageously at an ISM frequency to nearby multimedia terminals either scrambled or unscrambled. This second transmission may be modulated using a modulation method suitable for digital transmission. The power of the transmitter is so low that the range of the transmission is a few meters to a few hundred meters. In a broadcast network, all information needed in a particular target area can be transmitted broadband to the multimedia terminals located in the target area. Each multimedia terminal receives the second transmission and de-scrambles it if necessary. Each multimedia terminal may have a wireless return connection to the gateway terminal, thus realizing a real-time interactive wireless multimedia network.

An advantage of the invention is that one site/apartment/office needs only one gateway terminal/decoder apparatus.

Another advantage of the invention is that several DVB transmissions can be transmitted simultaneously to different multimedia terminals by means of a device according to the invention.

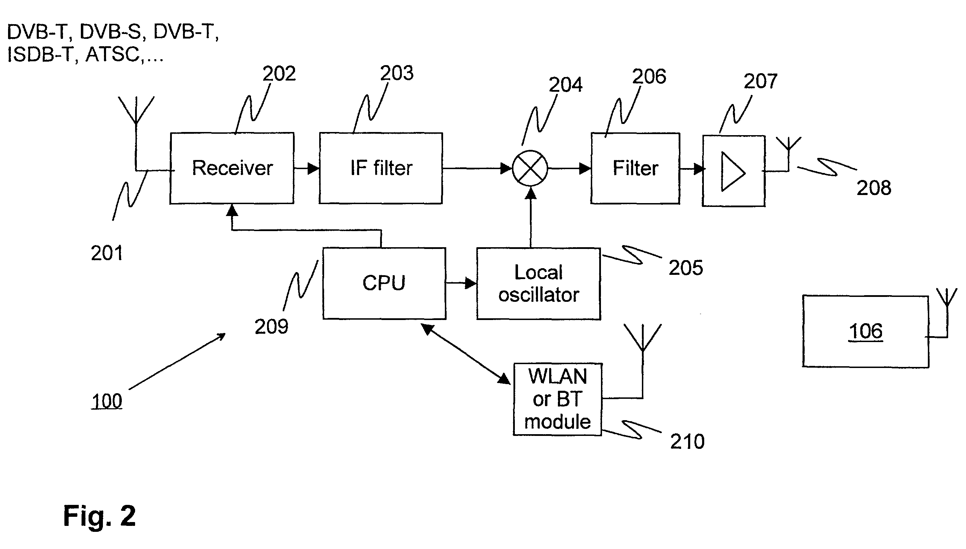

Another advantage of the invention is that the original broadcast transmission can be transmitted further to different multimedia terminals without demodulation/modulation and descrambling/scrambling steps, which makes the gateway terminal very cost effective in the example of fig 2.

Another advantage of the invention is that terminal-specific connection scrambling can be realized in the gateway terminal according to the invention.

Another advantage of the invention is that the system does not restrict the operation of other similar devices nearby.

Another advantage of the invention is that it can be used to realize an interactive local area network providing a plurality of services and operating in a limited area.

The invention is described in detail in the following. Reference is made to the accompanying drawings in which,
- Fig. 1: shows by way of example a broadcast network arrangement of an embodiment of the invention,
- Fig. 2: shows by way of example the main functional elements of the gateway terminal in an embodiment of the invention in the simply configuration,
- Fig. 3: shows by way of example a gateway terminal block diagram configuration where the received broadcast signal is demodulated, descrambled and again scrambled by using a password according to an embodiment of the invention,
- Fig. 4: shows by way of example a block diagram configuration of a gateway terminal, including full re-multiplexing of the received broadcast signal, stored local multimedia contents and local analogue signals in a further embodiment of the invention,
- Fig.5: shows by a way of example a block diagram of the multimedia terminal according to an embodiment of the invention,
- Fig.6: shows by a way of example how re-multiplexing handles signals from different sources according to the invention,
- Fig.7: shows in a form of a flowchart a diagram depicting the connection set-up and maintenance between the gateway terminal and multimedia terminal.

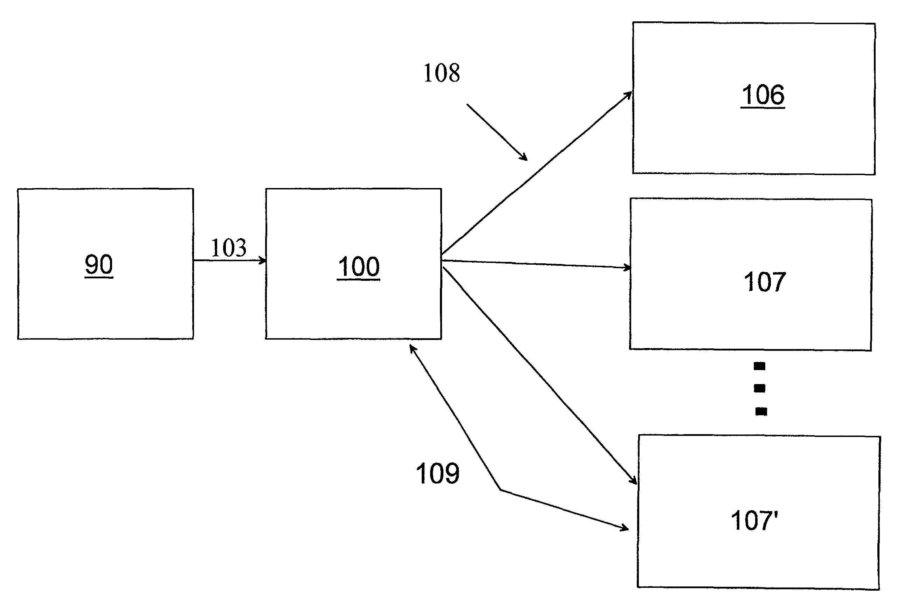

Fig. 1 shows by way of example the main components in a broadcast network arrangement according to an embodiment of the invention. The arrangement comprises a gateway terminal 100 and one or more terminals (106, 107, 107') which advantageously are multimedia terminals. They can be used to receive sound, pictures, video image and data. If required, the multimedia terminals may also operate interactively in some applications. The gateway terminal 100 comprises two functionally separate parts. The broadband part (not shown) operates mainly as a receiver for first broadcast transmission like TV and video transmissions and as a transmitter for a broadband second transmission. The generally available first transmission/signal/data/service 103 arriving in the broadband part may be transmitted via a satellite, terrestrial TV/radio network or cable network. The first transmission is transmitted from a broadcast transmitter 90 delivering the transmission/signal/data/service 103. The broadband part carries out the processing of the received signal, advantageously demodulating and de-scrambling the received first signal. Another function of the broadband part 101 is to re-transmit to the multimedia terminals, which are in its operating area, the received first transmissions/signals/data/service as a broadband second transmission 108. The received first transmissions/signals/data/service may be re-scrambled in a way the multimedia terminal (106, 107, 107') may de-scramble the broadband second transmission when the transmission is received by the multimedia terminal (106, 107, 107').

In another embodiment of the invention the gateway terminal does not perform descrambling and deinterleaving but instead the gateway terminal re-transmits the transmission as such to the multimedia terminals. In one advantageous embodiment the gateway terminal 100 comprises also hard disk or some other non-volatile memory where the received data can be saved temporarily. This saved data can be transmitted later on to a certain multimedia terminal. The frequencies used between gateway terminal and multimedia terminal are advantageously so-called ISM frequencies that can be freely used without a special permission from the authorities. Such frequencies include e.g. 2.45 GHz, 5.6 GHz and 17 GHz, but there are also other frequency bands reserved for similar use and they can be used in the broadcast network arrangement according to the invention. The power of the transmitter in the gateway terminal is low, whereby the range of the second transmission transmitted by the gateway terminal at the frequencies used is about hundreds of meters in free space and tens of meters inside a building which, however, is enough for the functions in question.

The other functional part of the gateway terminal 100 comprises an interactive part (not shown) maintaining interactive functions. It includes the connection means through which the gateway terminal is connected with external systems via two-way connections (not shown). Advantageously these connections are GSM, GPRS, WCDMA, DECT, WLAN, PSTN, ISDN, ADSL and xDSL connections or the DOCSIS return channel in cable TV environment. The transmission rate of an external connection varies according to the connection used, which may be a partly or fully scrambled connection if necessary. Moreover, local analog or digital first connections/devices/signal sources (not shown) may be unidirectionally connected with the interactive part. Such connections advantageously include analog audio and video connections, PC's hard disk, DVD drive, data monitoring and security systems. The interactive part processes the received first signal and scrambles it, if necessary, for re-transmission. In one embodiment, the interactive part saves the first signal temporarily in a non-volatile memory before re-transmitting it to the multimedia terminals. The interactive part may direct the processed first transmission/signal/data either into the broadband part to be included in the second transmission or transmit the transmission/signal/data itself to the multimedia terminals (106, 107, 107') using a suitable wireless technique such as e.g. GSM, GPRS, DECT, UMTS or WLAN. A connection according to the IEEE 802.11 or a Bluetooth connection is advantageously used, but an infrared-based connection is also possible. The multimedia terminals can communicate with the gateway terminal 100 through the same wireless link. Thus, they can request the gateway terminal 100 to include in its second transmission 108 external and/or local first transmissions/signals/data needed by the multimedia terminal (106, 107, 107'). The wireless connection can be also used between the gateway terminal 100 and the multimedia terminals (106, 107, 107') in case of an interference to negotiate new frequency to be used for broadcast from the ISM band. Also, the local wireless connection has to be located on a different frequency within the ISM band than the second transmission 108. On the other hand, using this wireless link the gateway terminal 100 may advantageously force at least one multimedia terminal (106, 107, 107') to operate as a plain display or alarm unit.

Fig 2. Shows by way of example the main functional elements of the gateway terminal 100 according the an embodiment of the invention. A first transmission 201 to be received may come via a cable or via an antenna. The first transmission 201 from the external source is received in a receiver 202. The first transmission passes a base band or intermediate frequency filter 203 and is further mixed by a mixer 204 with a local oscillator signal from a local oscillator 205 to obtain the targeted ISM frequency. After the mixer 204 the signal goes through a filter 206 and an amplifier 207 and is connected to an antenna 208. Central Processing Unit, CPU 209 including microprocessor and required memory is used to control all gateway terminal functionality, communications via the wireless connection 210 to multimedia terminals (106) and all communication tasks between the user and the gateway terminal 100.

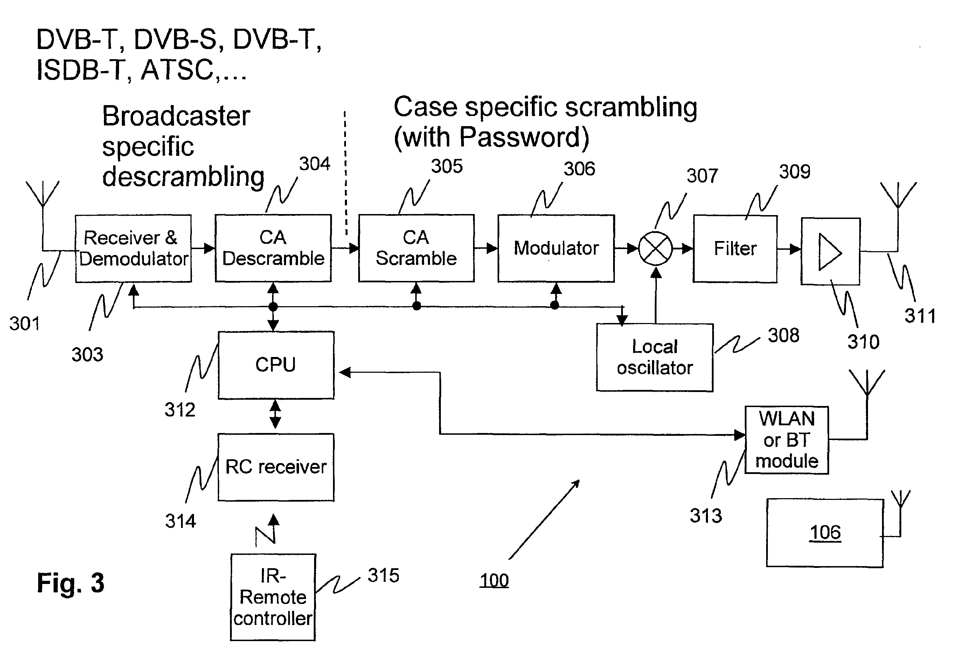

Fig. 3 shows by way of example the main functional elements of the gateway terminal 100 where received broadcast signal is demodulated, descramble and again scrambled using a password according to an embodiment of the invention. A first transmission 301 to be received may come via cable or via antenna. The first transmission 301 from the external source is received and demodulated in a block 303. Advantageously the selected programs or services from the first transmission 301 is descrambled, however only if necessary, in a block 304. In block 305, selected programs or services from the first transmission signal are further scrambled based on the password given by the user. Scrambled second transmission signal is modulated by a modulator 306 using digital modulation methods, mixed to desired ISM band by a mixer 307 using local oscillator signal from a local oscillator 308, filtered by a filter 309, amplified by an amplifier 310 and coupled to an antenna 311. Central Processing Unit, CPU 312 including microprocessor and required memory is used to control all gateway terminal functionality, communications via the wireless connection by a block 313 to multimedia terminals and all communication tasks between the user and the gateway terminal. Remote control receiver 314 is used to feed the password from a wireless remote controller 315 such as an Infra-Red controller.

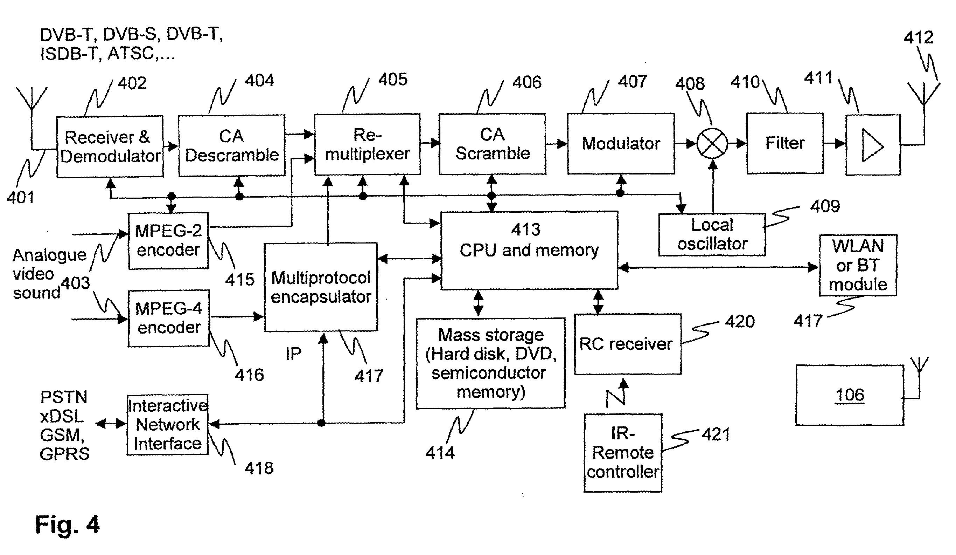

Fig. 4 shows by way of example the main functional elements of the gateway terminal 100 including full remultiplexing of the received broadcast signal, stored local multimedia contents and local analogue signals. A first transmission 401 to be received may come via a cable or via an antenna or it may be obtained by feeding to the gateway terminal sound, pictures, video or data including Internet Protocol (IP) packeted data from local source 403. The first transmission 401 is received and demodulated in a receiver and demodulator 402. Advantageously the first transmission is descrambled, if necessary in a block 404. After demultiplexing the data of the first transmission in a re-multiplexer 405, desired video, audio or data services can be saved temporarily in a mass storage 414. The CPU 413 controls this mass storage unit . The mass storage 414 can be a hard disk, a recordable DVD, or a semiconductor memory. In the re-multiplexer 405, the received or saved first transmission is multiplexed for retransmission. Re-multiplexer 405 can also have input signals directly or via temporary mass storage 414, from MPEG-2 compression block 415, or from MPEG-4 or MP3 compression block 416 via multiprotocol encapsulation by a multiprotocol encapsulator 417. Re-multiplexer 405 can have input also from interactive network interface 418, either directly or via the temporary mass storage 414. From the re-multiplexer 405 the data stream is conducted to functional block 406 where all or some first transmission or their parts are scrambled, if necessary for the broadband second transmission. A remote control receiver 420 is used to feed the password from a wireless remote controller 421.

Still referring to fig. 4, the scrambled and interleaved data stream is taken to a modulator 407. The modulation method may be a modulation method known as such. Advantageously it may be OFDM (Orthogonal Frequency Division Multiplexing) modulation, QAM (Quadrature Amplitude Modulation), 8-VSB (Vestigial Sideband) modulation or QPSK (Quadrature Phase Shift Keying) modulation. The modulated second transmission is conducted to a mixer 408 the mixing signal of which is provided by a local oscillator 409. The frequency of the second broadband transmission can be advantageously changed in accordance with a known sequence, applying a so-called frequency hopping technique in the re-transmission. Changing the frequency of the second broadband transmission allows for the use of several gateway terminals 100 in one and the same geographical area. On the other hand, it is possible to use a single transmission frequency if the conditions allow. Next, the signal is filtered with a bypass filter 410 and amplified by an amplifier 411 from which the resulting broadband second transmission is conducted to an antenna 412. The operation of the gateway terminal is controlled by a central processing unit 413. The operations comprising the demodulation of the received transmission up to the local oscillator 409 control.

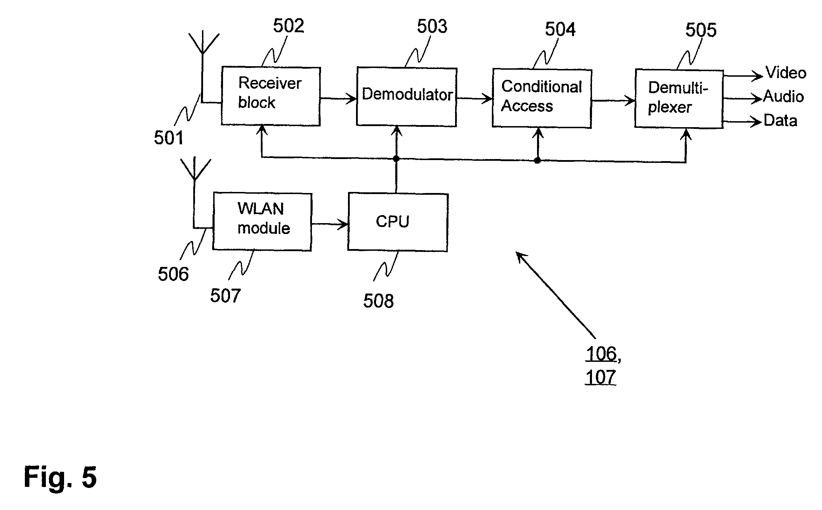

Fig. 5 shows by way of example the main parts of a multimedia terminal 106,107 according to an embodiment of the invention. The broadband digital second transmission transmitted by the gateway terminal is received by an antenna 501 and conducted to a receiver 502. The received transmission is demodulated in a demodulator 503. If necessary, the received second broadband transmission is descrambled in block 504 from which the bit stream is conducted to a demultiplexer 505. Descrambling in a multimedia terminal (106) can be defined in the broadcast arrangement according to an embodiment of the invention as a service for which the user has to pay. The demultiplexer 505 separates the video, audio and data. Finally video and audio streams are decompressed and connected to video display and to audio circuits.

Still referring to figure 5, the multimedia terminal, advantageously, further comprises means for establishing a wireless return connection to the gateway terminal 100. This connection is advantageously realized by means of a separate unit 507 suitable for wireless communication, and an antenna 506 thereof. The connection is implemented advantageously as a GSM, GPRS, DECT, UMTS, IR or Bluetooth connection or a WLAN connection according to the IEEE 802.11 standard or as a two-way connection according to the HomeRF standard. Short-range wireless networks include both wireless personal area networks ("PANs") and wireless local area network ("WLANs"). Both of these networks have the common feature of operating in unlicensed portions of the radio spectrum, usually either in the 2.4 GHz Industrial, Scientific, and Medical (ISM) band or the 5 GHz Unlicensed-National Information Infrastructure ("U-NII") band. Wireless personal area networks use low cost, low power wireless devices that have a typical range of ten meters. The best-known example of wireless personal area network technology is the Bluetooth Standard, which operates in the 2.4 GHz ISM band. Bluetooth is a short-range radio network, originally intended as a cable replacement. It can be used to create ad hoc networks of up to eight devices operating together. The Bluetooth Special Interest Group, Specification Of The Bluetooth System, Volumes 1 and 2, Core and Profiles: Version 1.1, 22nd February, 2001, describes the principles of Bluetooth device operation and communication protocols. Bluetooth devices are designed to find other Bluetooth devices within their radio communications range and to discover what services they offer, using a service discovery protocol (SDP). Examples of wireless local area network technology include the IEEE 802.11 Wireless LAN Standard and the HIPERLAN Standard, which operate in the 5 GHz U-NII band. The IEEE 802.11 Wireless LAN Standard is published in three parts as IEEE 802.11-1999; IEEE 802.11a-1999; and IEEE 802.11b-1999, which are available from the IEEE, Inc. web site http://grouper.ieee.org/groups/802/11. An overview of the HIPERLAN Type 2 principles of operation is provided in the Broadband Radio Access Networks (BRAN), HIPERLAN Type 2; System Overview, ETSI TR 101 683 VI.I.1 (2000-02).

The exemplary arrangement shown in Fig. 5 uses a WLAN connection. On the return channel connection between the multimedia terminal 106 and the gateway terminal 100 each multimedia terminal (106, 107, 107') may send to the gateway terminal 100 specifications about what the multimedia terminal in question wants the second broadband transmission 108 transmitted by the gateway terminal to contain, i.e. each terminal independently transmits a connection request message to the gateway terminal when an application used by the terminal so requires. In addition, the wireless connection in question can be used in conjunction with applications requiring interactivity. The overall operation of the multimedia terminal is controlled by its central processing unit 508. Through the wireless connection the gateway terminal 100 can force the multimedia terminal 106 to function as a plain display or alarm unit, if necessary.

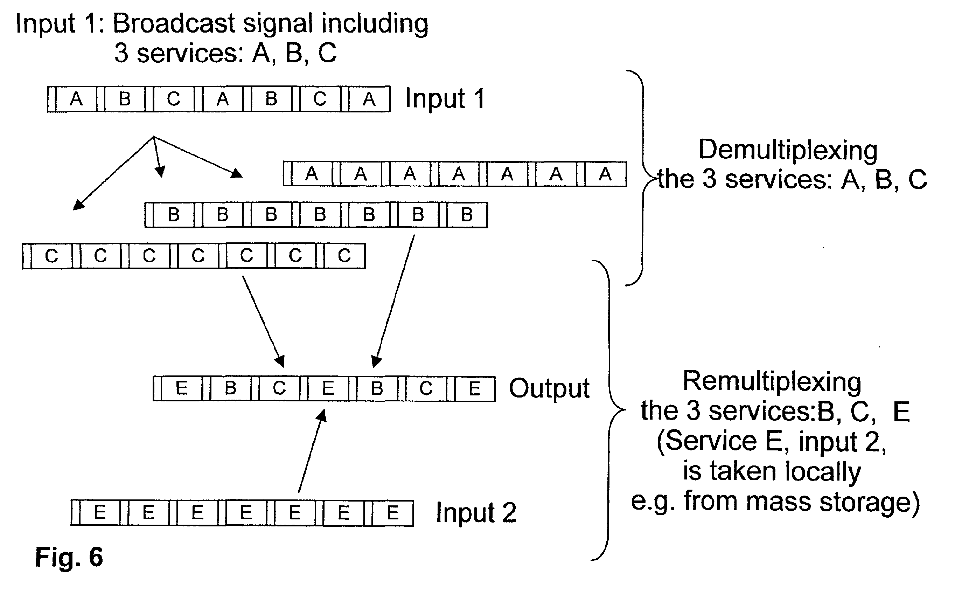

Fig.6 shows by a way of example how remultiplexing operates signals from different sources according to an embodiment of the invention. Input 1 shows the broadcast signal including three services: A, B, C that are received by the gateway terminal 100. Example of figure 6 is applicable in the example of the Fig. 2 so that the first transmission, namely broadcast signal including services A, B and C, passes the filter and is further mixed to obtain the targeted ISM frequency and will be transmitted to the multimedia terminal 106. Moreover, the Fig. 6 example is applicable in the example of Fig. 5 so that the first transmission, for example, the broadcast signal including services A, B, and C is demultiplexed as "A, B and C streams". In both examples (Figs 2, 5) and of course in the example of fig. 4, further service E as input 2 is obtained locally from the mass storage linked to the gateway terminal 100. The Services (A, B, C) from the first transmission, which would be demultiplexed broadcast stream and the service (E) from the local storage is remultiplexed to be ready to be transmitted as the broadband second transmission.

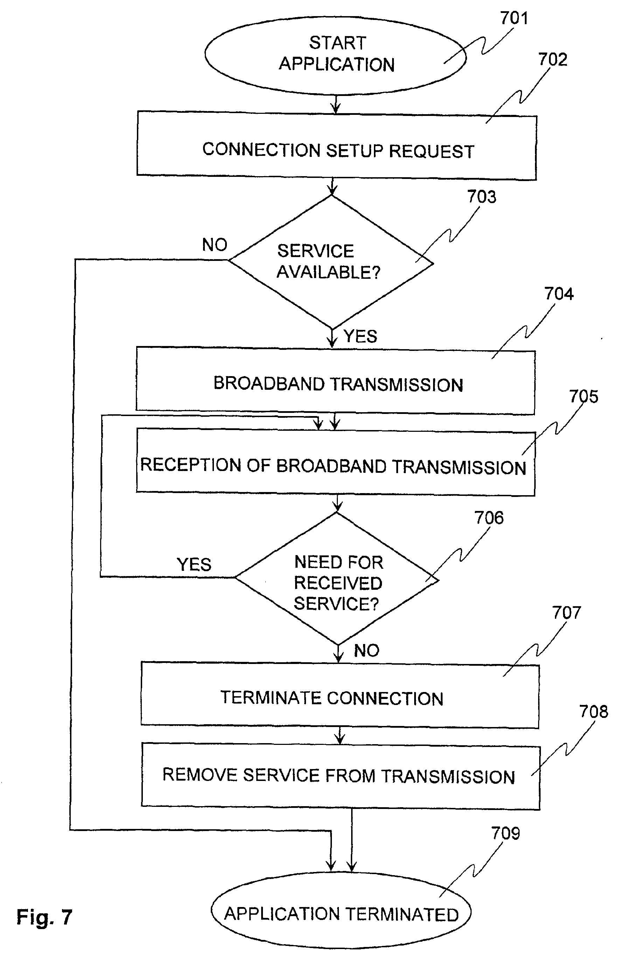

Figure 7 shows in a form of a flowchart a diagram depicting the connection set-up and maintenance between the gateway terminal and multimedia terminal. An application is started at a multimedia terminal in step 701. The multimedia terminal sends a request, in step 702, through a wireless link to the gateway terminal, specifying what it wants to receive in the second transmission transmitted by the gateway terminal. At the same time it may advantageously specify whether or not that part of the second transmission will be scrambled. Likewise, other operations may be specified for the second transmission to ensure good reception. In condition 703 the gateway terminal determines whether the first transmission/signal/data/service wanted by the multimedia terminal is available at that moment. If not, the procedure goes to step 709 in which the service wanted by the multimedia terminal cannot be obtained. The gateway terminal informs the multimedia terminal accordingly. But if the first transmission/signal/data/service wanted by the multimedia terminal is available to the gateway terminal either live, i.e. directly transmitted or while the transmission occurs, or saved in the non-volatile memory of the gateway, the terminal includes transmission/signal/data/service in its broadband second transmission in step 704. An individual multimedia terminal receives the broadband second transmission from the gateway terminal in step 705. It descrambles the second transmission, if necessary, and carries out other appropriate signal processing measures. Finally, the received first transmission/signal/data/service is utilized in the application in question.

Still referring to figure 7, from time to time the multimedia terminal determines whether the currently running service is needed or not in condition 706. If the service is needed, the terminal continues to receive the broadband transmission. If, however, it is found out that there is no need for the transmission/signal/data/service any more, the multimedia terminal sends, in step 707, a message to the gateway terminal indicating, that the transmission/signal/data/service, which was required earlier by the terminal, need not be included in the broadband transmission any more. In step 708, the gateway terminal removes the aforementioned first transmission/signal/data/service from the broadband second transmission which the gateway terminal has transmitted. The transmission/signal/data/service may be removed completely or in part, which means that a given multimedia terminal cannot receive the first transmission/signal/data/service scrambled by the gateway terminal even if it still were included in the second transmission in question. In step 709 the multimedia terminal is idled as regards the application in question.

Above it was described some advantageous embodiments of the invention. The invention is not limited to the embodiments described above. The intentional idea may be applied in many ways within the scope defined by the claims.

## Claims

1. A method for distributing data stream locally in which method
- receiving first transmissions (103, 201, 301, 401) from digital broadcast network by means of a gateway terminal (100), **characterized in that**
- re-transmitting the received the first transmissions (103, 201, 301, 401, 704) as a digitally modulated local broadband second transmission (108) and
- that the second digital broadband transmission (108) is received by at least one multimedia terminal (106, 107, 107', 705).

2. A method according to claim 1, **characterized in that** every first transmission (103, 201, 301, 401) is broadcast scrambled, second transmission (108) is broadcast scrambled, and second transmission is descrambled in at least one multimedia terminal (106, 107, 107').

3. A method according to claim 1, **characterized in that** after each first transmission of the data stream has been received, the transmisson of data stream is descramled, the descrambled/ data stream is scrambled/interleaved locally.

4. A method according to claim 3, **characterized in that** the digital stream is re-scrambled using customer password.

5. A method according to claim 4, **characterized in that** customer password is given by a remote controller.

6. A method according to claim 5, **characterized in that** the same customer password is entered to media gateway (master, 108) and multimedia terminal (slave, 106, 107, 107') via a user interface of the remote controller.

7. A method according to claim 3, **characterized in that** the received signal is further multiplexed by re-multiplexing to compose locally even some local content consisting at least one of the following VCR, DVD player, hard disk, mobile phone.

8. A method according to claim 6, **characterized in that** the local content comprises MP3 music, multimedia messages, multimedia album, picture, album, movies.

9. A method according to claim 7, **characterized in that** the local content is required via wireless connection from multimedia terminal, media gateway or remote controller.

10. A method according to claim 1, **characterized in that** the first transmission (103, 201, 301, 401) is saved temporarily in a memory of the gateway terminal.

11. A method according to claim 1, **characterized in that** the digital broadband second transmission (108) is transmitted at a frequency allocated to free use.

12. A method according to claim 11, **characterized in that** the said frequency allocated to free use is an ISM frequency.

13. A method according to claim 2, **characterized in that** a first transmission (103, 201, 301, 401) addressed to a certain multimedia terminal (106, 107, 107'), which is included in the second transmission (108) of the gateway terminal (100), is re-scrambled in the gateway terminal.

14. A method according to claim 2, **characterized in that** a first transmission (103, 201, 301, 401) addressed to a certain multimedia terminal (106, 107, 107'), which is included in the second transmission (108) of the gateway terminal (100), is re-interleaved in the gateway terminal.

15. A method according to claim 13, **characterized in that** the re-scrambled first transmission (103, 201, 301, 401) addressed to a certain multimedia terminal (106, 107, 107'), which is included in the second transmission (108) transmitted by the gateway terminal (100), can be opened as a pay service.

16. A method according to claim 1, **characterized in that** the modulation method used in the second transmission (108) is one of the following: OFDM, QAM, 8-VSB, QPSK.

17. A method according to claim 1, **characterized in that** each multimedia terminal (106, 107) makes a request for the inclusion of a given first transmission in the digital broadband second transmission (108) by means of a separate wireless link (109).

18. A gateway terminal (100) receiving and transmitting data stream in a local, broadband and digital broadcast network , comprising
- a means for receiving first transmissions/signals/data (103, 201, 301, 401),
- a means for re-transmitting the received first transmissions/signals/data as a second transmission,
**characterized in that**
- The means for re-transmitting the received first transmissions/signals/data as a second broadband digital transmission comprises a broadband part for transmitting the second transmission (108) by a broadband digital transmission at a frequency allocated to free use.

19. A gateway terminal according to claim 18, **characterized in that** the gateway terminal (100) further comprises an interactive part for providing a broadband digital interactive broadcast network.

20. A gateway terminal according to claim 18, **characterized in that** the gateway terminal (100) further comprises means for saving the first transmission temporarily in the gateway.

21. A gateway terminal (100) according to claim 18, **characterized in that** the frequency allocated to free use is a frequency allocated to ISM use.

22. A gateway terminal (100) according to claim 18, **characterized in that** it further comprises a means for descrambling and deinterleaving the first transmissions/signals/data, if necessary.

23. A gateway terminal (100) according to claim 18, **characterized in that** the means for receiving generally available first transmissions/signals/data (103, 201, 301, 401) comprises a receiver and demodulator block (303, 404) and, after that, a descrambling and deinterleaving block (304, 404).

24. A gateway terminal (100) according to claim 18, **characterized in that** the means for receiving and processing locally available first transmissions/signals/data (403, 418) comprises a MPEG-2 analog-to-digital converter (415).

25. A gateway terminal (100) according to claim 18, **characterized in that** the broadband part in the gateway terminal comprises
- a multiplexer block (405) arranged so that a generally available first transmission/signal/data is fed into it from a descrambling and deinterleaving block (404) and a locally available first transmission/signal/data is fed into it from a MPEG-2 analog-to-digital converter (415),
- a scrambling and interleaving block (406) after the multiplexer block,
- a modulator (307, 407) after the scrambling and interleaving block in order to produce the desired modulation,
- a mixer (204, 307, 408) and a local oscillator (205,308, 409) in connection therewith in order to convert the modulated signal into the desired ISM frequency,
- an amplifier (207, 309, 411) after the mixer in order to amplify the second transmission to be transmitted,
- an antenna (208, 311, 412) in order to transmit the amplified second transmission, and
- a central processing unit (209, 312, 413) in order to control the operation of all the aforementioned means.

26. A gateway terminal (100) according to claim 25, **characterized in that** the modulator (204, 307, 408) used is one of the following: OFDM modulator, QAM modulator, 8-VSB modulator, QPSK modulator.

27. A gateway terminal (100) according to claim 19, **characterized in that** the interactive part in the gateway terminal comprises
- a means for connecting the gateway terminal to an external communications network (418),
- a means for connecting the gateway terminal to a local signal source (403),
- a means for establishing a wireless link (109) between the gateway terminal (100) and at least one multimedia terminal (106, 107, 107'), and
- a central processing unit (209, 312, 413) shared with the broadband part in order to control the operation of the interactive part.

28. A gateway terminal (100) according to claim 27, **characterized in that** the wireless link (109) between the gateway terminal (100) and the multimedia terminal (106, 107, 107') is realized using technology complying with one of the following systems: GSM, GPRS, DECT, UMTS, WLAN, HomeRF, Bluetooth.

29. A multimedia terminal (106, 107, 107') of a local broadband digital broadcast network, comprising
- a receiving antenna (501) for a second transmission,
- a receiver block (502) for receiving a broadband second transmission,
- a demodulator block (503) for demodulating a received second transmission,
- a descrambling and deinterleaving block (504), and
- a demultiplexer (505) for separating received original first transmissions into transmissions/signals/data of their own,
**characterized in that** the receiving antenna for the second transmission in the multimedia terminal is arranged so as to function at a frequency allocated to free use.

30. A multimedia terminal (106, 107, 107') according to claim 29, **characterized in that** the said frequency allocated to free use is a frequency allocated to ISM use.

31. A multimedia terminal (106, 107, 107') according to claim 30, **characterized in that** it further comprises a wireless-communications-capable unit (507) with an antenna (506) and a central processing unit (508) controlling the operation of the multimedia terminal (106, 107, 107') in order to provide a wireless link (109) between the gateway terminal (100) and multimedia terminal (106, 107, 107').

32. A multimedia terminal (106, 107, 107') according to claim 30, **characterized in that** the wireless link (109) between the gateway terminal (100) and the multimedia terminal (106, 107, 107') is arranged so as to be realized using technology complying with one of the following standardized systems: GSM, GPRS, DECT, UMTS, IEEE 802.11, Bluetooth, HomeRF.

33. A multimedia terminal (106, 107, 107') according to claim 30, **characterized in that** the wireless-communications-capable unit (507) further comprises means arranged so as to give through the wireless link (109) instructions to the gateway terminal (100) regarding inclusion of desired first transmissions/signals/data (103, 201, 301, 401) in a broadband second transmission (108).

34. A local, broadband, digital broadcast network arrangement comprising
- a means (100) for receiving generally available or local first transmissions/signals/data/service,
- a means (100) for re-transmitting the said received first transmissions as a second transmission (108),
- a means for receiving the second transmission by means of at least one multimedia terminal (106, 107, 107'),
**characterized in that** the second transmission (108) is a wireless digital broadband transmission and it is arranged so as to be transmitted at a frequency allocated to free use.

35. A broadcast network arrangement according to claim 34, **characterized in that** the said frequency allocated to free use is an ISM frequency.

36. A broadcast network arrangement according to claim 34, **characterized in that** the broadcast network arrangement further comprises a means for establishing a two-way wireless link (109).

37. A broadcast network arrangement according to claim 36, **characterized in that** a communications connection is arranged to an individual multimedia terminal (106, 107, 107') via the wireless link (109), through which connection the terminal is able to control the gateway terminal (100) so as to include in its second transmission (108) a generally or locally available first transmission/signal/data/service (403, 414, 418) wanted by the multimedia terminal (106, 107, 107').

38. A broadcast network arrangement according to claim 36, **characterized in that** the gateway terminal (100) is through the wireless link (109) arranged so as to force the multimedia terminal (106, 107) to function as an alarm/display device.

39. A broadcast network arrangement according to claim 34, **characterized in that** the second transmission (108) transmitted by the gateway terminal (100) comprises at least one of the following: video image, sound, data, system monitoring/control information.

40. A broadcast network arrangement according to claim 34, **characterized in that** the broadband second transmission (108) is scrambled.
